# EUROPEAN PATENT APPLICATION

(11) **EP 4 427 576 A1**
(43) Date of publication of application: **11.09.2024**
(21) Application number: 23160596.5
(22) Date of filing: 07.03.2023
(51) Int. Cl.: A01D 61/00

(54) **BENT AUGER FLIGHT REINFORCEMENTS**

(71) Applicant: CNH Industrial Belgium N.V., 8210 Zedelgem (BE)
(72) Inventor: Blancke, Jeffrey, 8210 Zedelgem (BE); Van Belleghem, Stijn, 8210 Zedelgem (BE)
(74) Representative: CNH Industrial IP Department

(57) **Abstract**

An agricultural machine system (135, 235) includes: an agricultural work vehicle (100, 200); an agricultural machine (101, 201) coupled with the agricultural work vehicle (100, 200), including: an auger device (108, 208) including: a shaft (109, 209); at least one flight (110, 210) connected to the shaft (109, 209); and a reinforcement device (113, 213) connected to the shaft (109, 209) and the at least one flight (110, 210), the reinforcement device (113, 213) being configured for reinforcing the at least one flight (110, 210) and including at least one bend (334A, 334B) such that the reinforcement device (113, 213) at least partially extends in a longitudinal direction (335) of the shaft (109, 209).

## Description

### FIELD OF THE INVENTION

The present invention pertains to agricultural machine systems, and, more specifically, to augers.

### BACKGROUND OF THE INVENTION

Agricultural machine systems include various types of such systems that also include an auger configured for moving material, such as crop material or other type of material. For example and not by way of limitation, such systems include agricultural harvesters (which can be referred to as combines), bailers, and forage harvesters. As is known, augers include one or more flights configured for moving the material, and, depending upon what material is being moved and its condition, such flights can deform under stress associated with moving the material. Accordingly, such flights may need to be reinforced in order to prevent or otherwise mitigate such deformation. By way of example, one such agricultural machine system - which can be or include a forage harvester - is discussed in more detail.

Generally speaking, forage (which can also be referred to herein as crop, crop material, forage crop, forage material, or forage crop material) is plant material that can be harvested and provided to livestock or other animals as fodder, including but not limited to cattle, sheep, goats, and horses, during, for example, the winter or at other times when pasture land has inadequate amounts of vegetation for livestock or other animals. Forage can be made from, for example, grass and/or legumes. Depending upon the processing of the forage, forage can be formed into hay or silage. Forage formed as such can be made from grass and legumes (or mixtures thereof), and silage can also be made from, for example, corn or wheat. Hay (whether grass hay, legume hay, or a mixture thereof) results from a process that includes planting (though the plant matter is often perennial), growing, cutting, drying, and storing. Depending upon location, grass hay can include, for example, orchard grass, timothy, fescue, brome, Bermuda grass, Kentucky bluegrass, ryegrass, and/or cereal grass, for example, corn, sorghum, and/or oats, whereas legume hay can include, for example, alfalfa, clover, and/or birdsfoot trefoil. Silage (which can, at least in some circumstances, also be referred to as haylage) can involve causing the crop material to ferment.

Further, depending upon the desired end product with respect to the forage (i.e., hay or silage), a variety of forage processing operations can be involved, and these forage processing operations include haymaking operations and silage-making operations. Haymaking operations, for example, can include planting, cutting (which can be referred to as mowing), picking up, conditioning, tedding, raking, merging, chopping, baling, bale retrieval, transport, and/or storage, and silage-making operations can include not only planting and cutting but also chopping, baling, and/or ensiling (or at least using some sort of covering). A variety of agricultural machine systems can be used to perform these operations. Such systems include planters, mowers, mower-conditioners, tedders, rakes, mergers, choppers, balers, bale retrievers, and/or forage harvesters.

As indicated, one such agricultural machine system is a forage harvester. Such forage harvesters can be formed as a self-propelled forage harvester, or, alternatively, as a pull-type forage harvester coupled with a tractor. Regardless of whether the forage harvester is self-propelled or a pull-type, at least one variety of the forage harvester can include a pickup and an auger. The pickup picks up forage material (which is crop material) lying on the ground and conveys this crop material to the auger, which in turn conveys the crop material to feedrolls for further processing downstream. The auger of the pickup (such as a grass pickup) pushes the crop material and thereby centralizes the crop material to be received by the feedrolls eventually. Many swaths or windrows of crop material lying on the ground are wider than the feedrolls, and thus the auger centralizes the crop material as indicated. Thus, the flights of the auger need to be able to transport the crop material as indicated, and the crop material can be heavy.

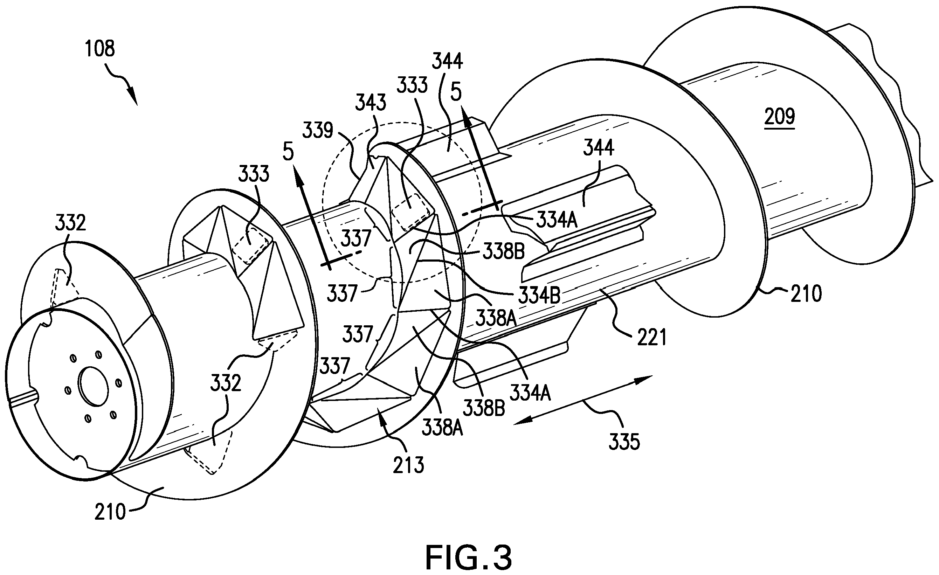

A problem can arise, however, as indicated above. Depending upon the crop material and the crop conditions (i.e., heavy crop material), the auger flights themselves may not be strong enough to move the crop material adequately and, as a result, may bend and thus undesirably deform under the force associated with the heavy crop material. According to a conventional solution to this problem, the auger flights are reinforced with reinforcements (structure 332 in FIG. 3, below) spaced apart angularly along an auger shaft and a respective auger flight, each reinforcement having two generally triangular plates attached to one another as well as the auger shaft and flight. With this type of reinforcement, the respective auger flight can bend in between these reinforcements, and the crop material can wrap around these reinforcements.

Another conventional solution is to support the flight with a reinforcement that is a rolled part and that forms an angle of 12° between the reinforcement (to the flight) and the shaft due to the manufacturing process. A disadvantage of this angle is that the stiffness for the flight is unsatisfactory.

Chinese publication CN 203410977 U discloses an auger including a shaft, a spiral shaft blade attached to the shaft, and a plurality of wear plates attached to the blade by fasteners. The wear plates are spaced apart from the shaft.

Further, it is known to be able to form an auger flight into a helical shape by bending in steps.

What is needed in the art is an agricultural machine with an auger that has at least one flight that is reinforced with a reinforcement such that the flight does not bend and the crop material does not wrap around the reinforcement.

### SUMMARY OF THE INVENTION

The present invention provides an agricultural machine system including an agricultural work machine with an auger that includes a shaft and a flight reinforcement device that includes at least one bend that enables the flight reinforcement device to at least partially extend in a longitudinal direction of the shaft.

The invention in one form is directed to an agricultural machine system which includes: an agricultural work vehicle; an agricultural machine coupled with the agricultural work vehicle, including: an auger device including: a shaft; at least one flight connected to the shaft; and a reinforcement device connected to the shaft and the at least one flight, the reinforcement device being configured for reinforcing the at least one flight and including at least one bend such that the reinforcement device at least partially extends in a longitudinal direction of the shaft.

The invention in another form is directed to an agricultural machine of an agricultural machine system, the agricultural machine system including an agricultural work vehicle, the agricultural machine being coupled with the agricultural work vehicle, the agricultural machine including: an auger device including: a shaft; at least one flight connected to the shaft; and a reinforcement device connected to the shaft and the at least one flight, the reinforcement device being configured for reinforcing the at least one flight and including at least one bend such that the reinforcement device at least partially extends in a longitudinal direction of the shaft.

The invention in yet another form is directed to a method of using an agricultural machine system, the method including the steps of: providing an agricultural work vehicle and an agricultural machine coupled with the agricultural work vehicle, the agricultural machine including: an auger device including: a shaft; at least one flight connected to the shaft; and a reinforcement device connected to the shaft and the at least one flight, the reinforcement device including at least one bend such that the reinforcement device at least partially extends in a longitudinal direction of the shaft; and reinforcing the at least one flight by the reinforcement device.

An advantage of the present invention is that a respective auger flight is reinforced on the downstream side of the flight with one or more of the reinforcements for the entire, or at least substantially the entire, length of the respective flight, the reinforcement device having a substantially similar helical shape as the flight.

Another advantage of the present invention is that, because of the relatively high angle that the reinforcement makes with the auger shaft (for example, 40°), the flight has a substantially higher strength and stiffness, for example, as compared to the prior art configuration discussed above which has an angle of 12°.

Yet another advantage of the present invention is that the reinforcement has a substantially smooth shape - even at the 40° angle - such that crop material does not wrap about the reinforcement. By contrast, the prior art configuration of the reinforcement discussed above which has an angle of 12° is smooth only up to 12° and cannot be smooth with an angle of 40°.

### BRIEF DESCRIPTION OF THE DRAWINGS

For the purpose of illustration, there are shown in the drawings certain embodiments of the present invention. It should be understood, however, that the invention is not limited to the precise arrangements, dimensions, and instruments shown. Like numerals indicate like elements throughout the drawings. In the drawings:
FIG. 1 illustrates schematically an agricultural machine system including an agricultural work vehicle and an agricultural machine coupled thereto, the agricultural machine including an auger, in accordance with an exemplary embodiment of the present invention;
FIG. 2 illustrates a perspective view of an exemplary embodiment of the agricultural machine system of FIG. 1, formed as a self-propelled forage harvester, in accordance with an exemplary embodiment of the present invention;
FIG. 3 illustrates a perspective view of the auger of FIG. 2, which includes at least one flight and a reinforcement device, in accordance with an exemplary embodiment of the present invention;
FIG. 4 illustrates a perspective view of the auger of FIG. 3, with portions broken away, in accordance with an exemplary embodiment of the present invention;
FIG. 5 illustrates a cross-sectional view of the auger of FIG. 3 taken along line 5-5 in FIG. 3, in accordance with an exemplary embodiment of the present invention;
FIG. 6 illustrates a perspective view of a member of the reinforcement device of FIG. 3, prior to bending of the member, in accordance with an exemplary embodiment of the present invention;
FIG. 7 illustrates a perspective view of the member of FIG. 6, after bending of the member but before attaching the member to a shaft of the auger and the flight; and
FIG. 8 illustrates a flow diagram showing a method of using an agricultural machine system, in accordance with an exemplary embodiment of the present invention.

### DETAILED DESCRIPTION OF THE INVENTION

The terms "forward", "rearward", "left" and "right", when used in connection with an agricultural machine system, an agricultural work vehicle, an agricultural machine, and/or components thereof are usually determined with reference to the direction of forward operative travel of the agricultural machine system, the agricultural vehicle, and/or the agricultural machine, but they should not be construed as limiting. The terms "longitudinal" and "transverse" are determined with reference to the fore-and-aft direction of the agricultural machine system, the agricultural vehicle, and/or the agricultural machine and are equally not to be construed as limiting. The terms "downstream" and "upstream" are determined with reference to the intended direction of crop material flow during operation, with "downstream" being analogous to "rearward" and "upstream" being analogous to "forward."

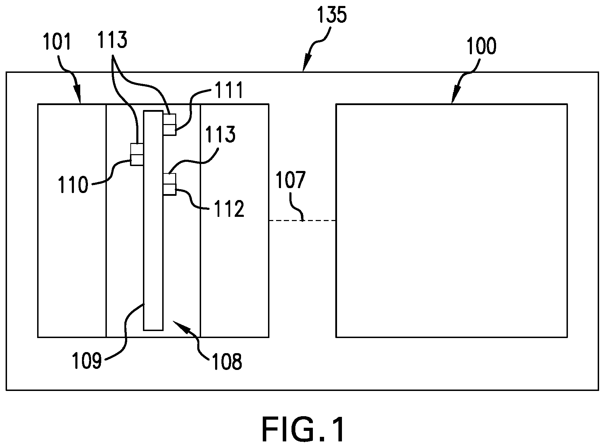

Referring now to the drawings, and more particularly to FIG. 1, there is shown schematically an agricultural machine system 135 which includes an agricultural work vehicle 100 and an agricultural machine 101, agricultural machine 101 being coupled with vehicle 100 and including an auger 108 (which can be referred to as an auger device). For example and not by way of limitation, system 135 can be an agricultural harvester (which can be referred to as a combine), a bailer, or a forage harvester. Regardless of the embodiment forming system 135, what is significant is that system 135 includes auger 108. Thus, for instance, vehicle 100 can be a machine that provides a motive force to enable agricultural machine 101 to traverse a field and harvest crop material. Thus, vehicle 100 can be, for example, a tractor, whether with wheels or skids, or, alternatively, a main body to which a header mounts thereto. Alternatively, vehicle 100 can be a main body that itself includes a subsystem, which can be referred to herein as a machine 101, such as an unloading auger of a combine. Agricultural machine 101, thus, can be such a subsystem, or, alternatively, an attachment to vehicle 100. Such an attachment can be formed as a header attached to a front of vehicle 100, a side implement, or an implement pulled by vehicle 100 and generally positioned to a rear of vehicle (though such a pull-type implement can also be offset to a side of vehicle 100). Regarding machine 101 formed as a header, such header 101 can be a header for a combine or a forage harvester, to name merely two examples. Regarding machine 101 formed as a pull-type implement, pull-type implement 101 can be a pull-type forage harvester or a baler, to name merely two examples. Pull-type implements can be coupled with vehicle 100 by way of a tongue or drawbar 107 (which is placed in broken lines in FIG. 1 to indicate that tongue/drawbar 107 apples to only certain embodiments of system 135).

Further, auger 108 is configured for moving material, such as crop material, downstream. FIG. 1 schematically shows that auger 108 includes an auger shaft 109 (which can be a tube), at least one auger flight 110 connected to shaft 109, and a reinforcement device 113 connected to both shaft 109 and flight 110, reinforcement device 113 being configured for reinforcing flight 110 and thereby strengthening and stiffening flight 110 so that flight 110 does not deform under stresses induced when shaft 109 is rotating so as to move crop material by way of flight 110. According to the embodiment of auger 108 shown in FIG. 1, FIG. 1 shows a single flight 110 with a first end 111 (including a terminating end of flight 110) and a second end 112 (including an opposing terminating end of flight 110), flight 110 thus extending from one longitudinal end of shaft 109 to at or near a central portion 221 of shaft 109, with flight 110 being configured to move crop material to the central portion 221 of shaft 109 as shaft 109 rotates. Though flight 110 is shown in what appears to be disconnected pieces in FIG. 1, it is understood that flight 110 is, instead, a continuous flight 110 helically surrounding shaft 109.

Further, reinforcement device 113 is also continuous, rather than disconnected, so as to helically surround shaft 110. Reinforcement device 113 extends from first end 111 to second end 112, which can mean from the terminating end of flight 110 associated with first end 111 to the terminating end of flight 110 associated with second end 112. On the other hand, reinforcement device 113 may not extend longitudinally all the way to each terminating end but may be short of one or both terminating ends. Reinforcement device 113 is positioned to a downstream side of flight 110 so as to push against flight 110 when forces from crop material push against flight on the other side (upstream side) of flight 110, reinforcement device 113 thereby supporting and thus reinforcing flight 110 so that flight 110 does not deform under the stress from crop material.

Work vehicle 100 can be operator-driven or autonomously driven. Alternatively, vehicle 100 and work machine 101 may together form an autonomous vehicle, such that work machine 101 is a self-propelled machine that does not rely on a separate vehicle for propulsion and/or power to function.

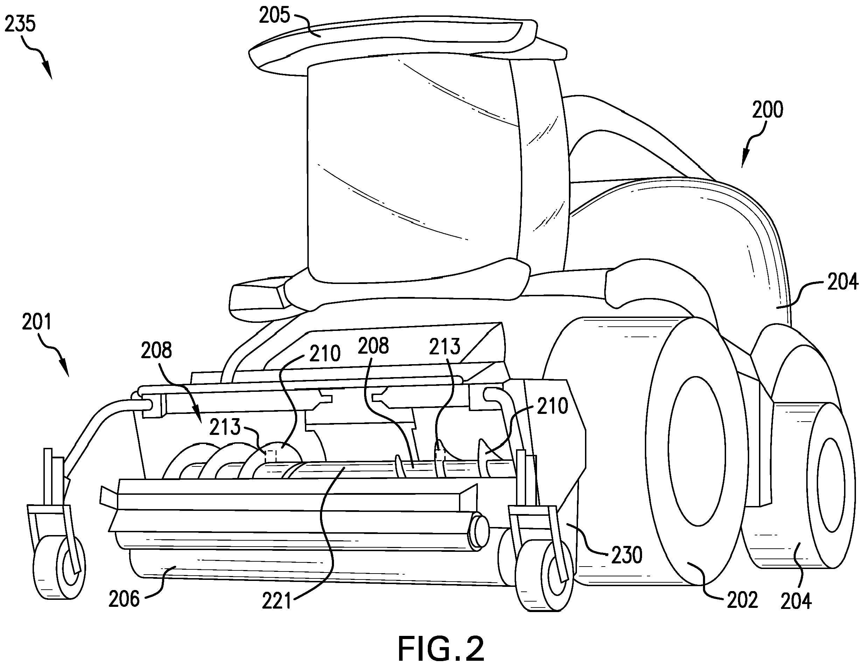

Referring now to FIG. 2, there is shown a perspective view of agricultural machine system 235, which is an exemplary embodiment of agricultural machine system 135, according to exemplary embodiment of the present invention. All prior reference numbers with respect to agricultural machine system 135 are increased by a multiple of 100 and thus are substantially similar to the structures and function described and shown with respect to FIG. 1, unless otherwise shown and/or described differently. Thus, agricultural machine system 135 is labeled as 235 in FIG. 2. Agricultural machine system 235 is formed as a self-propelled forage harvester 235. Agricultural machine system 235 includes agricultural work vehicle 200 and agricultural machine 201. Work vehicle 200 includes a pair of front wheels 202, a pair of rear wheels 203, and a chassis 204 (which can also be referred to as a frame 104) coupled to and supported by the wheels 202, 203. An operator's cab 205 may be supported by a portion of the chassis 204 and may house various input devices for permitting an operator to control the operation of work vehicle 200 and/or machine 201. Additionally, work vehicle 200 may include an engine and a transmission mounted on chassis 204. The transmission may be operably coupled to the engine and may provide variably adjusted gear ratios for transferring engine power to wheels 202 and/or 203 via a drive axle assembly. Though not shown, work vehicle 200 may be coupled to machine 201 in part via a power take-off (PTO)(which includes a PTO shaft) and any other suitable ways, including chains, or the like. As such, work vehicle 100 may, for example, guide machine 201 toward crop material in the field. Agricultural work machine 201 is formed as a header 201 which is coupled with frame 204 and thus with a front portion of vehicle 200 and includes auger 208 (which can be referred to as an auger device). Agricultural machine 201 is configured for performing an agricultural operation within a field, this operation including picking up forage material from the ground and conveying the forage material to vehicle 200 for further processing. Further, work machine 201 includes a frame 230 and further includes a pickup device 206 and auger 208, pickup device 206 and auger 208 being coupled with frame 230. Though not shown, agricultural machine system 235 can include a control system for controlling any aspect of system 235, including machine 201.

It should be appreciated that the configuration of work vehicle 200 described above and shown in FIG. 2 is provided only as one example. Thus, it should be appreciated that the present disclosure may be readily adaptable to any manner of work vehicle configuration. For example, in an alternative embodiment, a separate frame or chassis may be provided to which the engine, transmission, and drive axle assembly are coupled. Still other configurations may use an articulated chassis to steer work vehicle, or rely on tracks in lieu of wheels 202, 203. Additionally, as indicated previously, work vehicle 200 may, in some embodiments, be configured as an autonomous vehicle. In such embodiments, work vehicle 200 may include suitable components for providing autonomous vehicle operation and, depending on the vehicle configuration, need not include the operator's cab 205. Additionally, it should be appreciated that the configuration of machine 201 described above and shown in FIG. 2 is provided only as one example. Thus, it should be appreciated that the present disclosure may be readily adaptable to any manner of machine with an auger.

Further, as indicated above, auger 208 includes auger shaft 209, at least one flight 210 connected to shaft 209, and reinforcement device 213 connected to shaft 209 and flight 210. In the embodiment shown here, auger 208 includes two flights 210, which are configured for moving forage material from outboard ends of auger 208 to a central portion 221 of auger 208, so that forage material can then be conveyed downstream to feedrolls for further processing (the central portion 221 of auger 209 can include one or more suitable devices 344 that help to move the forage material downstream after these devices 344 receive the forage material from flights 210, as is known). Each flight 210 includes a first end (including a terminating end of flight 110) and a second end (including an opposing terminating end of flight 110) as described above (not labeled in FIG. 2), each of the first and second ends being outboard ends of each flight 210, each flight 210 thus extending from one outboard, longitudinal end of shaft 209 to at or near the central portion 221 of shaft 209. Because auger 209 includes two flights 210, auger 209 also includes two reinforcement devices 213, one reinforcement device 213 being attached to a respective flight 210. Each reinforcement device 213 is configured for reinforcing and thereby supporting the respective flight 210 against deformation. Each reinforcement device 213 can be attached to shaft 209 and a respective flight 210 in any suitable manner, such as by welding. In FIG. 2, each reinforcement device 213 is show schematically as a box attached to a respective upstream side of the respective flight 213. The left side reinforcement device 213 (as viewed when viewing the page of FIG. 2) is shown in broken lines, because this reinforcement device 213 is actually hidden from view by the left side flight 210 in FIG. 2, considering that each reinforcement device 213 is on the downstream side of the respective flight 210.

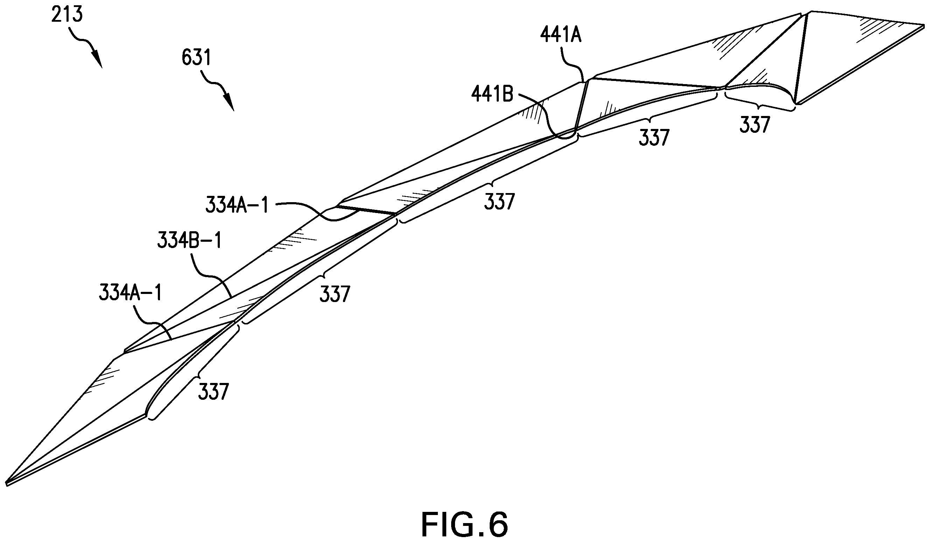

Referring now to FIG. 3, there is shown a perspective view of auger 208 of FIG. 2. Auger 208 includes shaft 208, two flights 210, and a reinforcement device 213 attached to shaft 209 and the respective flight 210 as described above (though, for illustrative purposes, only one flight 210 - the left flight 210 as viewed in FIG. 3 - is shown to have a reinforcement device 213 attached thereto). For illustrative purposes, devices 344 in the central portion 221 of auger 208 (devices 344 being configured for moving forage material further downstream toward vehicle 200) are not shown in FIG. 3. Further, for illustrative purposes, only part of a reinforcement device 213 is shown in FIG. 3, though it can be appreciated (in particular, in light of the description above with respect to FIG. 1) that reinforcement device 213 extends from the first end to the second end (i.e., 111, 112 in FIG. 1) of flight 210. Reinforcement device 213 can optionally include a plurality of members 631 (FIG. 6) which are substantially similar to one another and which are placed end-to-end relative to one another so as to extend at least substantially the entire length of a respective flight 210 (from first end 111 to second end 112, as indicated above)(optionally, members 631 may be connected to one another in any suitable manner, such as by welding). Further, auger 208 may optionally include conventional reinforcements 332 configured for reinforcing flight 210; reinforcements 332 are formed as triangular plates attached to one another as well as shaft 209 and flight 210 and spaced apart angularly along shaft 209 and flight 210. Reinforcements 332 may remain as part of auger 208 for reasons of cost, and, if reinforcements 332 are present, reinforcements 332 are located underneath reinforcement device 213. On the other hand, it should be appreciated that reinforcements 332 are not required to practice the present invention with reinforcement device 213 (which is why reinforcements 332 are placed in broken lines). Thus, reinforcements 332 can be removed from auger 209 (or never installed in the first place) prior to installing reinforcement 213. Further, auger 208 may optionally be weighted for purposes of balancing auger 208 and thus may include any suitable weight(s) to accomplish such balancing, such as weighted plates 333 (which are in broken lines to indicate that weights 333 are not essential to the present invention).

Each reinforcement device 213 includes a plurality of bends 334A and 334B (which can be referred to as folds) such that reinforcement device 213 at least partially extends in a longitudinal direction 335 of shaft 209 in a helical shape like flight 210; that is, bends 334A, 334B, at least in part, enable reinforcement device 213 to be displaced left or right. In this way, each reinforcement device 213 is curved and displaced horizontally, like flight 210. Further, each member 631 of reinforcement device 213 can include a plurality of segments 337 which are separated from one another by bends 334A. Each segment 337 can further include two subsegments 338A, 338B separated from one another by diagonal bends 334B. Further, structure 343 is a bend of a paddle support which is connected to reinforcement device 213.

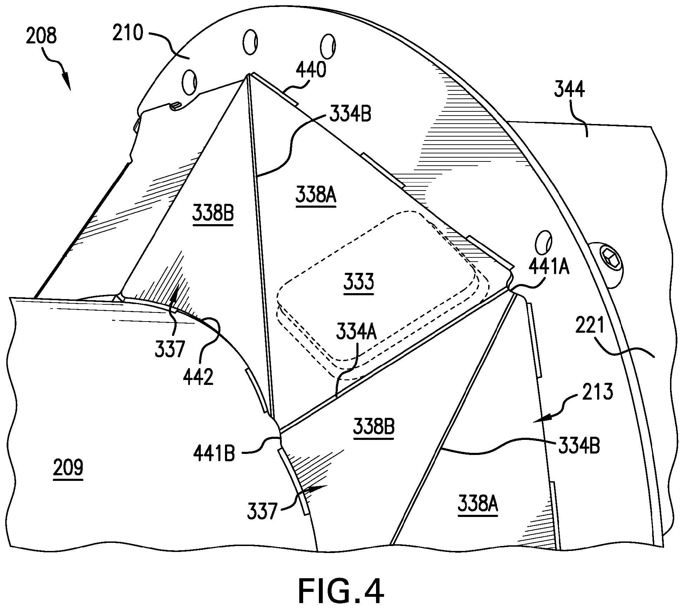

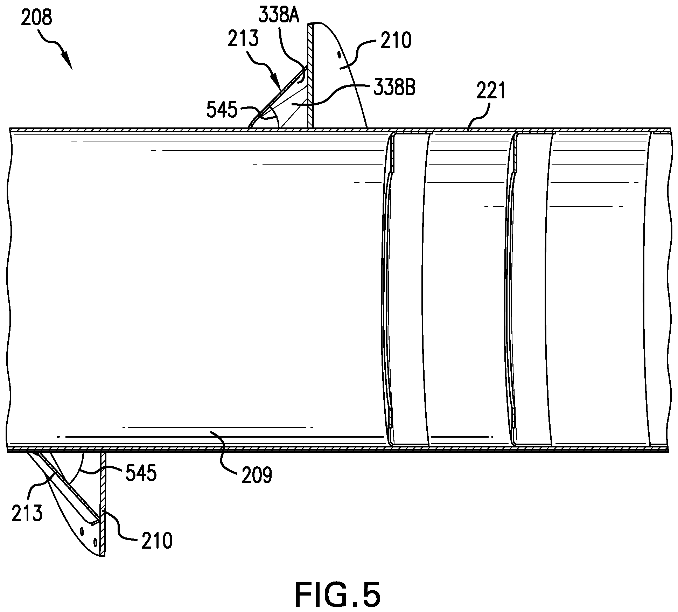

Referring now to FIG. 4, there is shown a zoomed-in view of approximately what is in broken line circle 339 in FIG. 3. More specifically, there is shown a perspective view of auger 208 with portions broken away. Auger 208 includes shaft 209, flight 210 (which is shown to optionally include holes near an outer diameter of flight 210, which are not shown in FIG. 3, for illustrative purposes), and reinforcement device 213. Reinforcement device 213 includes segment 337, subsegments 338, and bends 334A, 334B. Weight plate 333 is also shown (in broken lines). A plurality of welds 440 can be used to attach reinforcement device 213 to flight 210. Bend 334A joins segments 337, and bend 334B joins subsegments 338. Cutouts 441A, 441B can be positioned between adjoining segments 337 to facilitate bending at bend 334A. Subsegment 338B can be cut so as to have an inside diameter side 442 with an arcuate shape to more closely match the arcuate shape of shaft 209. Further, as is visible in FIGS. 3 and 4, although each segment 337 is angularly and horizontally (that is, in longitudinal direction 335) displaced relative to one another, each segment 337 is substantially similarly positioned relative to shaft 209 and flight 210; thus, each subsegment 338A is substantially similarly positioned relative to shaft 209 and flight 210, and each subsegment 338B is substantially similarly positioned relative to shaft 209 and flight 210. With respect to adjacent segments 337, the adjacent downstream segment 337 (the segment 337 more centrally located) can be angled (bent) at a predetermined angle more downstream along bend 334A than the adjacent upstream segment 337. Further, with respect to an individual segment 337, subsegments 338A and 338B are angled (bent) at a predetermined angle relative to one another along bend 334B, such that inside diameter side 442 is moved back towards flight 210. This sort of bending along bends 334A, 334B enables reinforcement device 213 to move horizontally along with flight 210. Further, because reinforcement device 213 is continuous (in contrast to reinforcements 332 which are intermittent), crop material does not get caught on - and thus wrap around - reinforcement device 213. It can be appreciated that the number of bends for a given length of reinforcement device 213 can be more or less than what is shown in the figures (see FIG. 5).

Referring now to FIG. 5, there is shown a cross-sectional view of auger 208 taken along line 5-5 in FIG. 3 (for illustrative purposes, FIG. 5 omits devices 344). This view shows that reinforcement device 213 forms an angle 545 of approximately 40° between shaft 209 and reinforcement device 213. More specifically, in the top portion of the cross-section, it can be seen that the cross-section is taken approximately along bend 334A. A value of 40° for angle 545 enables reinforcement device 213 to provide substantial resistance to deformation when flight 210 encounters high stresses caused by heavy forage material. Thus, reinforcement device 213 forms an angle 545 of 20 to 40 degrees with shaft 209, such as 40 degrees as shown in FIG. 5. Such an angle 545 provides strength and stiffness to flight 210.

Referring now to FIG. 6, there is shown a perspective view of reinforcement device 213, with portions broken away. More specifically, as indicated above, according to one embodiment of the present invention, reinforcement device 213 includes a plurality of members 631, each of which has substantially a C-shape and thus extends approximately 180° (member 631 can have any desired angular extent). One member 631 is shown in FIG. 6. This member 631 has not yet been fully manufactured and thus is not yet ready to be installed on shaft 209. Rather, member 631 in FIG. 6 has been cut from a larger extent of sheet metal (the material of this sheet metal can be any suitable material, such as steel, such as stainless steel) but has not yet been bent and is thus flat. Further, member 631 in FIG. 6 has been marked, such as by way of a laser, so as to mark where bends 334A, 334B will occur. The markings corresponding to where bend 334A will occur are shown as 334A-1, and the markings corresponding to where bend 334B will occur are shown as 334B-1. Cutouts 441A, 441B are provided, and inside diameter side 442 includes the arcuate shape. Thus, so far in the manufacturing process of making member 631, member 631 has been cut. Such cutting can be accomplished in any suitable manner, such as by way of laser cutting or stamping. In this way, a workpiece (which is what member 631 is during the manufacturing process) is cut.

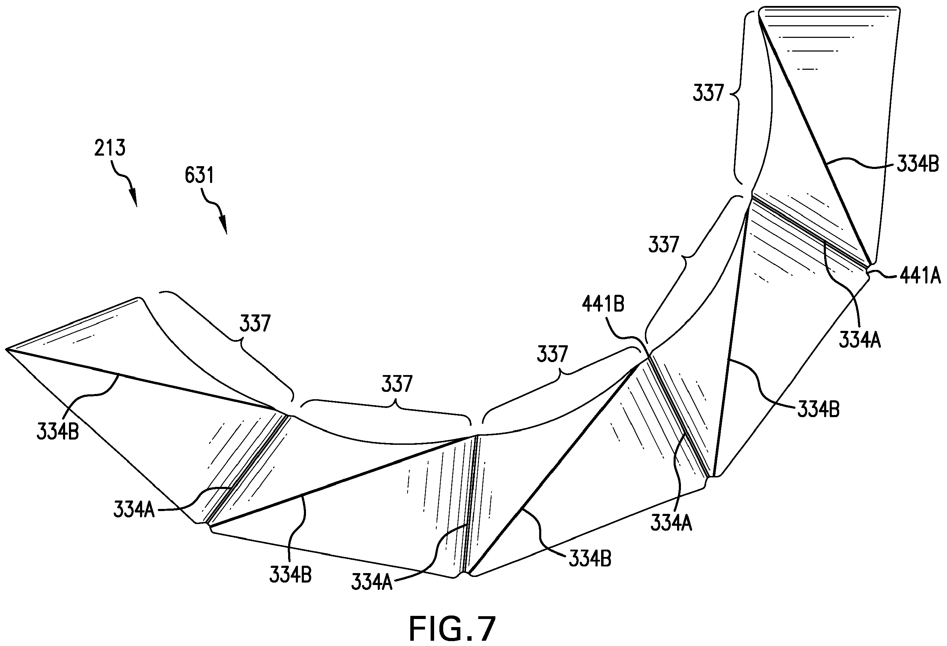

Referring now to FIG. 7, there is shown a perspective view of member 631 after member 631 has been bent but before member 631 has been attached to shaft 209 and flight 210 or to another member 631. More specifically, member 631 still retains essentially its C-shape but has lost its overall flatness seen in FIG. 6. That is, because of the bending, member 631 now extends horizontally such that member 631 now has a helical shape (best seen in FIG. 3). In terms of the bending, after cutting member 631, member 631 is bent along markings 334A-1, 334B-1 so as to form bends 334A, 334B. This bending occurs at predetermined angles and can be accomplished in any suitable manner, such as by way of a sheet metal bending machine. Thus, after member 631 is cut, member 631 (which can be referred to as a workpiece up to the point that member 631 is attached to shaft 209 and flight 210) is bent to form bends 334A, 334B and thereby to form member 631 into a predetermined shape. Member 631 can be bent in steps, for example, starting at one terminal end of member 631, bending that segment 337 at marking 334B-1 of that segment 337, bending at marking 334A-1 between that segment 337 and the adjacent segment 337, and repeating this sequence until the segment 337 at the opposing terminating end of member 631 is completed. After member 631 is bent as described, member 631 is welded to shaft 209 and flight 210. A plurality of members 631 can optionally be welded to one another before these members 631 are welded to shaft 209 and flight 210 such that this plurality of members 631 welded to one another is welded to shaft 209 and flight 210 as a single unit. Alternatively, a plurality of members 631 can first be welded to shaft 209 and flight 210 and then, subsequent thereto, this plurality of members 631 can be welded together. Alternatively, members 631 need not be welded to one another at all but are welded to shaft 209 and flight 210, according to an exemplary embodiment of the present invention. When members 631 are welded to shaft 209 and flight 210, members 631 are welded at an angle 545, for instance, of 40°. Member 631 fits close to flight 210 so that member 631 has a smooth shape in order to avoid wrapping of crop material around auger 208.

In use, reinforcement device 613 is made by cutting out member 631 from sheet metal, bending member 631 along markings 334A-1, 334B-1 to form bends 334A, 334B, and welding members 631 to shaft 209 and flight 210. Further, when members 631 are welded to shaft 209 and flight 210, members 631 are welded at an angle 545, for instance, of 40°. At this angle 545, flight 210 is substantially reinforced, so as to prevent deformation of flight 210 during use. Further, because reinforcement device 213 is continuous and substantially smooth, wrapping of forage material about reinforcement device 213 does not occur.

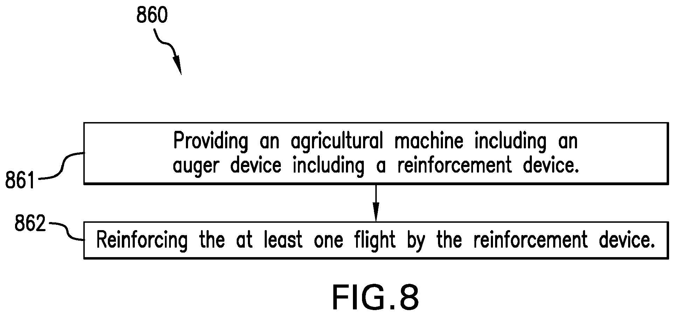

Referring now to FIG. 8, there is shown a flow diagram showing a method 860 of using an agricultural machine system 135, 235, the method 860 including the steps of: providing 861 an agricultural work vehicle 100, 200 and an agricultural machine 101, 201 coupled with agricultural work vehicle 100, 200, agricultural machine 101, 201 including: an auger device 108, 208 including: a shaft 109, 209; at least one flight 110, 210 connected to shaft 109, 209; and a reinforcement device 113, 213 connected to shaft 109, 209 and the at least one flight 110, 210, reinforcement device 113, 213 including at least one bend 334A, 334B such that reinforcement device 113, 213 at least partially extends in a longitudinal direction 335 of shaft 109, 209; and reinforcing 862 the at least one flight 110, 210 by reinforcement device 113, 213. Agricultural machine 101, 201 is a forage harvester, a bailer, or an agricultural harvester. The at least one flight 110, 210 includes a first end 111 and a second end 112, reinforcement device 113, 213 extending from first end 111 to second end 112. Reinforcement device 113, 213 forms an angle 545 of 20 to 40 degrees with shaft 109, 209, preferably 40 degrees. Auger device 108, 208 is produced using a method including the steps of: cutting a workpiece 631; bending the workpiece 631 to form a plurality bends 334A, 334B and thereby forming the workpiece 631 into a predetermined shape; and welding workpiece 631 to the shaft 109, 209 and the at least one flight 110, 210 to form reinforcement device 113, 213.

These and other advantages of the present invention will be apparent to those skilled in the art from the foregoing specification. Accordingly, it is to be recognized by those skilled in the art that changes or modifications may be made to the above-described embodiments without departing from the broad inventive concepts of the invention. It is to be understood that this invention is not limited to the particular embodiments described herein, but is intended to include all changes and modifications that are within the scope and spirit of the invention.

## Claims

1. An agricultural machine system (135, 235), comprising:
an agricultural work vehicle (100, 200);
an agricultural machine (101, 201) coupled with the agricultural work vehicle (100, 200), comprising:
an auger device (108, 208) including:
a shaft (109, 209);
at least one flight (110, 210) connected to the shaft (109, 209); and
a reinforcement device (113, 213) connected to the shaft (109, 209) and the at least one flight (110, 210), the reinforcement device (113, 213) being configured for reinforcing the at least one flight (110, 210) and including at least one bend (334A, 334B) such that the reinforcement device (113, 213) at least partially extends in a longitudinal direction (335) of the shaft (109, 209).

2. The agricultural machine system (135, 235) of claim 1, wherein the agricultural machine (101, 201) is a forage harvester, a bailer, or an agricultural harvester.

3. The agricultural machine system (135, 235) of any of the preceding claims, wherein the at least one flight (110, 210) includes a first end (111) and a second end (112), the reinforcement device (113, 213) extending from the first end (111) to the second end (112).

4. The agricultural machine system (135, 235) of any of the preceding claims, wherein the reinforcement device (113, 213) forms an angle (545) of 20 to 40 degrees with the shaft (109, 209), preferably 40 degrees.

5. The agricultural machine system (135, 235) of any of the preceding claims, wherein the auger device (108, 208) is produced using a method comprising the steps of:
cutting a workpiece (631);
bending the workpiece (631) to form a plurality bends (334A, 334B) and thereby forming the workpiece (631) into a predetermined shape; and
welding the workpiece (631) to the shaft (109, 209) and the at least one flight (110, 210) to form the reinforcement device (113, 213).

6. An agricultural machine (101, 201) of an agricultural machine system (135, 235), the agricultural machine system (135, 235) including an agricultural work vehicle (100, 200), the agricultural machine (101, 201) being coupled with the agricultural work vehicle (100, 200), the agricultural machine (101, 201) comprising:
an auger device (108, 208) including:
a shaft (109, 209);
at least one flight (110, 210) connected to the shaft (109, 209); and
a reinforcement device (113, 213) connected to the shaft (109, 209) and the at least one flight (110, 210), the reinforcement device (113, 213) being configured for reinforcing the at least one flight (110, 210) and including at least one bend (334A, 334B) such that the reinforcement device (113, 213) at least partially extends in a longitudinal direction (335) of the shaft (109, 209).

7. The agricultural machine (101, 201) of claim 6, wherein the agricultural machine (101, 201) is a forage harvester, a bailer, or an agricultural harvester.

8. The agricultural machine (101, 201) of any of claims 6 to 7, wherein the at least one flight (110, 210) includes a first end (111) and a second end (112), the reinforcement device (113, 213) extending from the first end (111) to the second end (112).

9. The agricultural machine (101, 201) of any of claims 6 to 8, wherein the reinforcement device (113, 213) forms an angle (545) of 20 to 40 degrees with the shaft (109, 209), preferably 40 degrees.

10. The agricultural machine (101, 201) of any of claims 6 to 9, wherein the auger device (108, 208) is produced using a method comprising the steps of:
cutting a workpiece (631);
bending the workpiece (631) to form a plurality bends (334A, 334B) and thereby forming the workpiece (631) into a predetermined shape; and
welding the workpiece (631) to the shaft (109, 209) and the at least one flight (110, 210) to form the reinforcement device (113, 213).

11. A method (860) of using an agricultural machine system (135, 235), the method (860) comprising the steps of:
providing (861) an agricultural work vehicle (100, 200) and an agricultural machine (101, 201) coupled with the agricultural work vehicle (100, 200), the agricultural machine (101, 201) including:
an auger device (108, 208) including:
a shaft (109, 209);
at least one flight (110, 210) connected to the shaft (109, 209); and
a reinforcement device (113, 213) connected to the shaft (109, 209) and the at least one flight (110, 210), the reinforcement device (113, 213) including at least one bend (334A, 334B) such that the reinforcement device (113, 213) at least partially extends in a longitudinal direction (335) of the shaft (109, 209); and
reinforcing (862) the at least one flight (110, 210) by the reinforcement device (113, 213).

12. The method (860) of claim 11, wherein the agricultural machine (101, 201) is a forage harvester, a bailer, or an agricultural harvester.

13. The method (860) of any of claims 11 to 12, wherein the at least one flight (110, 210) includes a first end (111) and a second end (112), the reinforcement device (113, 213) extending from the first end (111) to the second end (112).

14. The method (860) of any of claims 11 to 13, wherein the reinforcement device (113, 213) forms an angle (545) of 20 to 40 degrees with the shaft (109, 209), preferably 40 degrees.

15. The method (860) of any of claims 11 to 14, wherein the auger device (108, 208) is produced using a method comprising the steps of:
cutting a workpiece (631);
bending the workpiece (631) to form a plurality bends (334A, 334B) and thereby forming the workpiece (631) into a predetermined shape; and
welding the workpiece (631) to the shaft (109, 209) and the at least one flight (110, 210) to form the reinforcement device (113, 213).
